# EUROPÄISCHE PATENTSCHRIFT

(11) **EP 1 548 483 B1**
(45) Veröffentlichungstag und Bekanntmachung des Hinweises auf die Patenterteilung: **09.05.2012**
(21) Anmeldenummer: 04029781.4
(22) Anmeldetag: 16.12.2004
(51) Int. Cl.: G02B 21/02, G02B 7/02

(54) **Mikroskopobjektiv mit axial verstellbaren Korrekturfassungen**
Microscope objective with axially adjustable corrective mounts
Objectif pour un microscope avec des montures correctives axialement adjustables

(30) Priorität: 24.12.2003 DE 10361912
(43) Veröffentlichungstag der Anmeldung: 29.06.2005
(73) Patentinhaber: Carl Zeiss MicroImaging GmbH, 07745 Jena (DE)
(72) Erfinder: Herbst, Georg, 37085 Göttingen (DE); Henkel, Heinz-Hermann, 37085 Göttingen (DE); Ozimek, Heinz-Guenther, 37191 Katlenburg-Lindau (DE); Albrecht, Klaus-Dieter, 37120 Bovenden (DE); Fahlbusch, Ingo, 37077 Göttingen (DE)
(74) Vertreter: Scholze, Humbert

(56) Entgegenhaltungen:
- EP-A- 0 660 942
- DE-A1- 10 209 403
- US-A- 3 549 230
- US-A- 4 993 815

## Beschreibung

Die Erfindung betrifft ein Mikroskopobjektiv mit axial verstellbaren Korrekturfassungen, in welchen Linsen bzw. Linsengruppen angeordnet sind, insbesondere zur Live Cell Imaging und für Forschungen an Zellen- und Gewebekulturen. Die Erfindung ist an Mikroskopobjektiven in Verbindung mit unterschiedlichen Deckgläsern und/oder unterschiedlichen Immersionsflüssigkeiten und/oder bei unterschiedlichen Arbeitstemperaturen anwendbar.

Mit solchen axialen Verstellungen von optischen Gliedern in Objektiven können verschiedenartige Korrekturen vorgenommen werden, um damit ein Mikroskopieren unter verschiedenen Bedingungen mit hoher Qualität und bei hohen Abbildungsmaßstäben zu ermöglichen.

In Mikroskopobjektiven ist die axiale Verstellung von in Korrekturfassungen angeordneten optischen Gliedern in bezug auf feststehende optische Glieder auf unterschiedliche Weise realisiert.

In der DE 38 12 745 C2 ist ein Mikroskopobjektiv mit einer Apertur von mindestens 0,5 und einer Einrichtung zur Einstellung auf unterschiedliche Deckglasdicken beschrieben, bei welchem eine zwischen einer feststehenden ersten Linsengruppe und einer feststehenden dritten Linsengruppe eine zweite Linsengruppe linear verschiebbar angeordnet ist, zu welcher eine weitere Linsengruppe gegenläufig axial verschoben werden kann. Dabei können die Bewegungshübe dieser verschiebbaren Linsengruppen unterschiedlich sein. Zur Realisierung der Verschiebungen der entsprechenden Linsengruppen ist ein einziger Betätigungsring vorgesehen. Bei diesem Objektiv ist die Einrichtung zur Einstellung auf unterschiedliche Deckglasdicken mit einer Einrichtung zur Nachfokussierung des gesamten Objektivs gekoppelt. Die Linsengruppen werden im Zuge der Einstellbewegung linear verschoben. Dieses läßt sich beispielsweise durch Gewinde unterschiedlicher Steigung oder durch Nocken erreichen, welche in entsprechenden Nuten mit konstanter, jedoch unterschiedlicher Steigung in einen drehbaren Zwischenring der Linsenfassung eingreifen.

Aus der EP 0 660 942 B1 ist weiterhin ein Mikroskopobjektiv mit wenigstens einer Korrekturfassung bekannt, wobei die Korrekturfassung axial verschiebbar und um die optische Achse des Objektivs drehbar ist. Zur axialen Verschiebung und der gleichzeitigen radialen Drehung der Fassung ist ein auf einer Kurvennut eines Fassungsträgers bewegbarer Zapfen vorgesehen, welcher mit einem Ende fest mit der Korrekturfassung verbunden ist und mit dem anderen Ende in einen drehbaren Ring eingreift. Bei einem in dieser Druckschrift offenbartem Objektiv sind zwei axial verschiebbare und gleichzeitig drehbare Korrekturfassungen vorgesehen.

Eine Verstellvorrichtung für ein Objektiv ist in der DE 199 47 378 A1 beschrieben, welche mit einem axial beweglichen Optikglied versehen ist, das über eine Schiebefassung mit der Hauptfassung verbunden ist. Dabei ist ein erster Linearantrieb über Stellglieder mit einem zweiten Linearantrieb, welcher die Linearbewegung entlang der optischen Achse erzeugt, verbunden. Der zweite Linearantrieb ist mit der Schiebefassung verbunden.

Um bei derartigen bekannten Objektiven ein spielfreies Bewegen der Teile untereinander gewährleisten zu können, wird auf die mechanischen Bauteile durch Federn oder Federelemente ein gleichmäßiger Druck ausgeübt. Die erforderliche Federkraft wird, durch die Vielzahl der bewegten Teile mit den daraus resultierenden Reibungswiderständen und Gewichtskräften, meist so groß, dass der Einsatz einer herkömmlichen Spiralfeder kaum noch möglich ist.
In den eingeschränkten Bauraum eines Mikroobjektivs lässt sich eine solche Spiralfeder nicht mehr integrieren. Ein weiteres Kriterium für die Auslegung der Feder ist die möglichst uneingeschränkte Beweglichkeit der Bauteile. Durch die Korrektur unterschiedlicher Deckgläser werden einige Bauteile im Mikroobjektiv verdreht. Eine einzelne Spiralfeder wird hierbei auf Verwindung beansprucht, was sich negativ auf die Beweglichkeit der drehbaren Bauteile auswirkt.

Aus der DE 198 04 470 C1 ist ein Mikroskopobjektiv mit mehreren Linsengruppenfassungen bekannt, von denen eine als Korrekturfassung zur Anpassung an unterschiedliche Deckglasdicken ausgebildet und zur Positionsveränderung relativ zu feststehenden Linsenfassungen axial entlang der optischen Achse des Objektivs verschiebbar ist. Die axiale Verschiebung der Korrekturfassung erfolgt von einem um die optische Achse drehbaren Rändelring aus über einen Führungszapfen, welcher auf Kurvenringen läuft. Um ein Verkanten der Korrekturfassung zu verhindern und über einen großen Verstellbereich eine möglichst gleiche Federkraft zu gewährleisten, verfügt die Lösung über mehrere radial verteilte Druckfedern. Zur freien axialen Bewegung sind um die Druckfedern Hülsen angeordnet. Nachteilig wirkt sich hierbei aus, dass jede Druckfeder zur Führung in eine Hülse integriert ist, um das Knicken der Feder zu verhindern. Diese Hülse nimmt im Mikroobjektiv zusätzlichen Bauraum ein. Da die Druckfeder aufgrund eines zu gewährleistenden Federweges nicht komplett in der Hülse geführt wird, kann es im frei liegenden Bereich dennoch zu Abknickungen kommen. Bei dieser Konstruktion darf keine der Anlageflächen der einzelnen Druckfedern einer Drehbewegung ausgesetzt werden, da dies ein Knicken der Federn zur Folge hätte.

US 3,549,230 beschreibt ein ähnliches Linsensystem, bei dem die axiale Positionierung von Stellgliedern über einen Stellring vorgenommen wird. Dazu sind im Stellring Nuten eingebracht, in die Zapfen eingreifen. Durch eine Drehbewegung des Stellringes wird eine axiale Längsbewegung der Stellglieder umgesetzt, wobei die Stellglieder über die Zapfen den Nuten im Stellring folgen. Ein wesentlicher Nachteil ist das vorhandene Spiel zwischen den Zapfen und den Nuten, was zu Ungenauigkeiten in der optischen Übertragung führt.

Der vorliegenden Erfindung liegt die Aufgabe zugrunde ein Mikroskopobjektiv mit Korrekturfassungen zu schaffen, mit welchem bei einer geringen Baulänge des Objektivs Einstellungen zur Kompensation von Parametern, die die Abbildungsgüte beeinflussen, möglich sind und bei dem durch ein spielfreies Bewegen der Teile untereinander optische Abbildungsfehler minimiert werden.

Erfindungsgemäß wird die Aufgabe durch die Merkmale der unabhängigen Ansprüche gelöst. Bevorzugte Weiterbildungen und Ausgestaltungen sind Gegenstand der abhängigen Ansprüche.

So ergibt sich eine vorteilhafte Ausgestaltung bei einer kleinen Baulänge des gesamten Objektivs, wenn eine Hauptfassung, die mit einer innen liegenden Zylinderhülse mit axial gerichteten Durchbrüchen fest verbunden ist; axial verstellbare Korrekturfassungen zur Aufnahme optischer Glieder in Form von Linsen und/oder Linsengruppen, wobei die Korrekturfassungen in der Zylinderhülse gelagert sind und an denen außen jeweils ein, durch einen zugeordneten Durchbruch der Zylinderhülse hindurch greifender, radial gerichteter Bolzen oder Schraube angeordnet ist; mit jeweils einem Bolzen in Wirkverbindung stehende, mit einem Außengewinde gleicher oder unterschiedlicher Steigung versehene Gewinderinge, welche nur axial verschiebbar auf der Zylinderhülse gelagert sind und in ein Innengewinde entsprechender Steigung von jeweils den Gewinderingen zugeordneten Mitnahmeringen eingreifen, die um die optische Achse drehbar in der Hauptfassung angeordnet sind und mit mindestens einem außen an der Hauptfassung angeordneten Einstellring in Wirkverbindung stehen und mit diesem gedreht werden können.

Dabei ist es vorteilhaft, wenn die mit einem Einstellring in Wirkverbindung stehenden Mitnahmeringe fest miteinander verbunden und gemeinsam durch den Einstellring um die optische Achse drehbar sind.

Um unterschiedliche axiale Verstellwege der einzelnen Korrekturfassungen realisieren zu können, ist es von Vorteil, wenn die einem Einstellring zugeordneten Mitnahmeringe Gewinde gleicher oder unterschiedlicher Steigung aufweisen. Damit kann unterschiedlichen Korrekturbedingungen bei dem Objektiv Rechnung getragen werden.

Ferner ist es vorteilhaft, wenn zur Beseitigung des Spiels oder des toten Ganges im Gewinde zwischen den Mitnahmeringen und den zugeordneten Gewinderingen Federelemente angeordnet sind.

Vorteilhaft sind hier Druckfedern oder Elemente, welche die Funktion einer Druckfeder ausüben können, einsetzbar.

Es ist ferner vorteilhaft, wenn ein dem Schutz des Objektes dienendes Sicherheitselement mit der vorderen Korrekturfassung verbunden und mit dieser zusammen axial bewegbar ist.

Um eine stets spielfreie Verbindung zwischen einem Bolzen und dem zugeordneten Gewindering zu erreichen, ist es von Vorteil, wenn die Bolzen in eine durch mindestens einen federnden Steg gebildete, zum Rand des jeweils zugeordneten Gewinderinges hin offene Bohrung spielfrei eingreifen. Um stets eine Klemmung des Bolzens in der Bohrung zu realisieren, ist vorteilhaft der Durchmesser der Bohrung kleiner als der oder gleich dem Durchmesser des in die Bohrung des Gewinderinges eingreifenden Teiles des jeweiligen Bolzens.

Eine spielfreie Verbindung zwischen dem Bolzen und dem dazugehörigen Gewindering ergibt sich auch vorteilhaft, wenn zwischen dem Bolzen und der Wand der Bohrung des Gewinderinges ein elastisches Zwischenglied vorgesehen ist.

Die Erfindung dient dazu, in einem Mikroskopobjektiv eine optische Korrektur durch axiale Verschiebung von drei oder mehr Optikgliedern mit Hilfe von sich radial bewegenden Gewinderingen mit Gewinden gleicher oder unterschiedlicher Steigung, also ohne die sonst üblichen Kurvenringe und ohne spiralförmige Nuten in einzelnen Ringen zu verwenden, zu realisieren.

Weiterhin können auch neben den optischen Korrekturen Anpassungen an unterschiedliche Beobachtungsbedingungen vorgenommen werden. So wird das Arbeiten mit unterschiedlichen Immersionsmedien, z. B. Glyzerin oder Wasser, und auch in unterschiedlichen Temperaturbereichen, z. B. bei 23°C oder 37°C, und das Mikroskopieren mit verschiedenen Deckgläsern unterschiedlichen Dicke und Toleranz wesentlich erleichtert. Weiterhin ist bei diesem Objektiv eine geringe Baulänge in der Größenordnung von 50 mm erreichbar. Bei einem geringen Arbeitsabstand vom etwa 0,18 mm ist auch ein zuverlässiger Präparate- oder Objektschutz in einfacher Weise realisierbar.

Die Erfindung wird nachfolgend anhand eines Ausführungsbeispieles beschrieben. Dazu zeigen
- Figur 1:: einen teilweisen Längsschnitt durch ein erfindungsgemäßes Mikroskopobjektiv,
- Figur 2:: zwei Ringe mit unterschiedlicher Anzahl von Stiften,
- Figur 3 a - b:: verschiedene Ausführungen von Federkäfigen,
- Figur 4:: Komplettansicht und Details eines vorgefertigten, verbundenen Federkäfigs und
- Figur 5:: teilweise Längsschnitte durch zwei Mikroskopobjektive mit Federkäfigen.

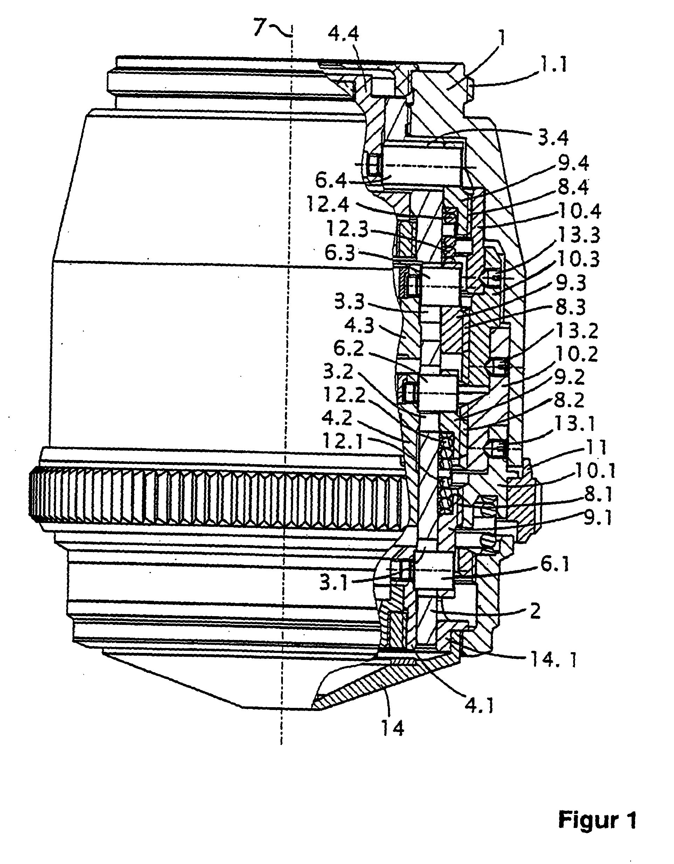

Das in **Figur 1** in einem Teilschnitt dargestellte Mikroskopobjektiv umfaßt eine mit einem Einschraubgewinde **1.1** versehene Hauptfassung **1** mit einer fest mit dieser verbundenen, innen liegenden Zylinderhülse **2**, welche axial gerichtete Durchbrüche **3.1** bis **3.4** besitzt und in der präzise, axial verstellbare Korrekturfassungen **4.1** bis **4.4** angeordnet sind. In diesem Ausführungsbeispiel sind vier Korrekturfassungen **4.1** bis **4.4** vorgesehen. Grundsätzlich ist es auch denkbar, mehr als vier, jedoch mindestens drei Korrekturfassungen vorzusehen. Entsprechend der Anzahl der im Objektiv vorhandenen Korrekturfassungen besitzt die Zylinderhülse **2** auch eine entsprechende Anzahl von Durchbrüchen. Auch die Anzahl der mit den Korrekturfassungen zusammen wirkenden Bauteile richtet sich nach der Anzahl der Korrekturfassungen. In diesen Korrekturfassungen **4.1** bis **4.4** sind die einzelnen optischen Glieder (nicht dargestellt) fest gefaßt, welche aus einzelnen Linsen und/oder aus Linsengruppen bestehen. An den einzelnen Korrekturfassungen **4.1** bis **4.4** ist außen jeweils ein, durch einen zugeordneten Durchbruch **3.1** bis **3.4** der Zylinderhülse **2** hindurch reichender (greifender), radial gerichteter Bolzen **6.1** bis **6.4** oder eine Schraube angeordnet. Ein jeder dieser Bolzen **6.1** bis **6.4** steht mit einem ihm zugeordneten Gewindering **9.1** bis **9.4** in Wirkverbindung. Diese Gewinderinge **9.1** bis **9.4** besitzen jeweils ein Außengewinde **8.1** bis **8.4** und sind nur axial verstellbar auf der Zylinderhülse **2** gelagert. Nach außen hin sind die Gewinderinge **9.1** bis **9.4** von Mitnahmeringen **10.1** bis **10.4** umgeben, welche in der Hauptfassung **1** angeordnet und mit jeweils einem Innengewinde entsprechender Steigung versehen sind, wobei diese Innengewinde mit den zugeordneten Außengewinden **8.1** bis **8.4** der Gewinderinge **9.1** bis **9.4** in Wirkverbindung stehen.

Die Gewinderinge **9.1** bis **9.4** und die Mitnahmeringe **10.1** bis **10.4** können Gewinde gleicher oder unterschiedlicher Steigung besitzen, so dass bei gleicher Drehung der Mitnahmeringe **10.1** bis **10.4** um die optische Achse **7** des Objektivs die drehfesten Gewinderinge **9.1** bis **9.4** unterschiedliche Verschiebungen in Richtung der optischen Achse **7** ausführen.

Die einzelnen Mitnahmeringe **10.1** bis **10.4** sind vorteilhaft durch Schrauben **13.1** bis **13.3** oder Stifte miteinander verbunden und stehen mit mindestens einem, von außen zu betätigenden und um die optische Achse **7** drehbaren Einstellring **11** in Wirkverbindung.

Bei dem Mikroskopobjektiv nach **Figur 1** ist ein Einstellring **11** vorgesehen, mit welchem die Mitnahmeringe **10.1** bis **10.4** gleichzeitig und gemeinsam um gleiche Drehungen verstellt werden können. Denkbar ist jedoch auch ein Objektiv (nicht dargestellt), welches mehrere Einstellringe besitzt, wobei dann einem Einstellring ein oder mehrere Mitnahmeringe zugeordnet sind, mit denen verschiedene axiale Verschiebungen der Korrekturfassungen mit den darin gefaßten optischen Gliedern ausgeführt werden können.

Objektseitig besitzt das Objektiv ein dem Objekt- oder Präparateschutz dienendes Sicherungselement **14,** welches über ein Zwischenteil **14.1** mit der vorderen Korrekturfassung **4.1** verbunden ist und mit dieser zusammen axial bewegt wird.

Die Verstellung der Korrekturfassungen **4.1** bis **4.4** wird in folgender Weise realisiert:
Die Korrekturfassungen **4.1** bis **4.4,** in denen die optischen Glieder (nicht dargestellt) gefaßt sind und die die Außengewinde **8.1** bis **8.4** tragenden Gewinderinge **9.1** bis **9.4** sind durch die Bolzen **6.1** bis **6.4** verbunden. Diese Bolzen **6.1** bis **6.4** sind durch die axialen Durchbrüche **3.1** bis **3.4** der fest in der Hauptfassung **1** angeordneten Zylinderhülse **2** hindurch geführt und besitzen somit zusammen mit den Gewinderingen **9.1** bis **9.4** und den Korrekturfassungen 4.1 bis **4.4** nur eine Verstell- bzw. Verschiebungsmöglichkeit in Richtung der optischen Achse **7**. Eine Drehung um die Achse **7** ist nicht möglich. Durch Drehung des Einstellringes **11** um die optische Achse **7** werden die miteinander verbundenen Mitnahmeringe 10.1 bis 10.4 mit um die optische Achse 7 gedreht. Durch Drehung der Mitnahmeringe **10.1** bis **10.4** mittels des Einstellringes **11** wird infolge des Zusammenwirkens des Innengewindes dieser Mitnahmeringe mit den entsprechenden Außengewinden **8.1** bis **8.4** der verdrehfest angeordneten Gewinderinge **9.1** bis **9.4** eine axiale Verstellung der Korrekturfassungen **4.1** bis **4.4** und der darin gefaßten optischen Glieder realisiert.

Um das Spiel oder den toten Gang zwischen den miteinander im Eingriff stehenden Gewinden der Mitnahmeringe **10.1** bis **10.4** und der zugeordneten Gewinderinge **9.1** bis **9.4** zu eliminieren, sind Federelemente **12.1** bis **12.4** vorgesehen, welche die Gewindeflanken der in Wirkverbindung stehenden Gewinde der betreffenden Gewinde- und Mitnahmeringe stets gegeneinander drücken.

Die in **Figur 1** dargestellten Federelemente **12.1** bis **12.4** entsprechen den nach dem Stand der Technik üblich verwendeten. Im Gegensatz dazu werden in den weiteren Figuren die erfindungsgemäßen Federelemente in Details bzw. Komplettansichten dargestellt.

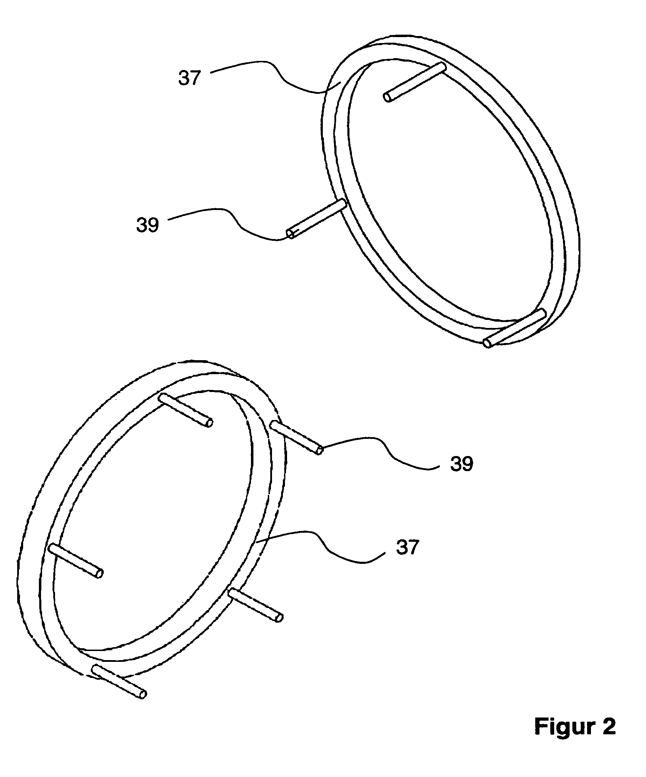

Bei den erfindungsgemäßen Federelementen sind jeweils mindestens drei, gleichmäßig über den Umfang verteilte, in axialer Richtung wirkende Spiralfedern **36** vorhanden. Diese Spiralfedern **36** werden durch einen ersten Ring **37** fixiert, der über Stifte **39** in axialer Richtung verfügt, auf die die Spiralfedern **36** gesteckt sind. **Figur 2** zeigt dazu drei Ringe **37** mit unterschiedlicher Anzahl von Stiften **39**.

Die Anzahl der Stifte **39** bzw. der Spiralfedern 36 richtet sich nach der zu realisierenden Federkraft, die durch die Reibungswiderstände der bewegten Teile und deren Gewichtskräfte bestimmt werden. Der zu realisierende Federweg kann durch die Länge der Stifte **39** bzw. Spiralfedern **36** variiert werden.

Die Stifte **39** des ersten Ringes **37** greifen in Bohrungen **40** eines zweiten Rings 38, wobei die Bohrungen 40 zumindest so tief sind, dass der erforderliche Federweg gewährleistet ist. Die beiden Ringe **37** und **38** mit den zwischen diesen, auf Stiften **39** angeordneten Spiralfedern **36** bilden einen Federkäfig, der jeweils zwischen den Gewinderingen **9.1** bis **9.4** und Zylinderhülse **2** angeordnet werden kann und ein spielfreies bewegen der Teile gewährleistet.

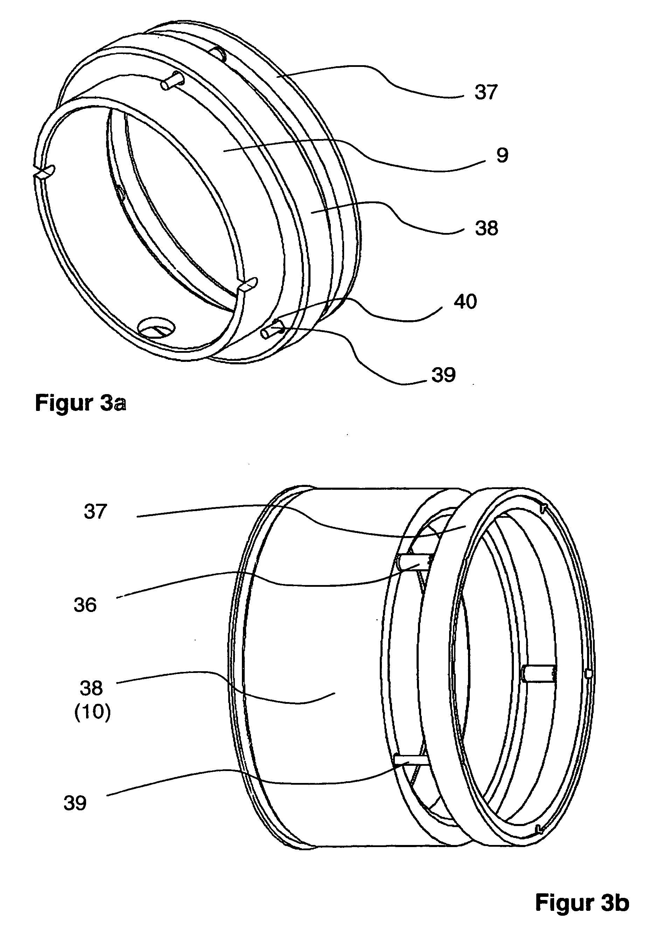

In einer vorteilhaften Ausgestaltung kann zumindest einer der beiden Ringe **37** oder **38,** als Gewindering **9.1** bis **9.4** (siehe dazu **Figur 3a**) oder Mitnahmering **10.1** bis **10.4** (siehe dazu **Figur 3b**) ausgebildet sein.

Wird der zweite Ring **38** mit den die Stifte **39** des ersten Ringes **37** aufnehmenden Bohrungen **40** mit der Hauptfassung **1** fest verbunden oder in diese integriert, so kann auf eine zusätzlich Verdrehsicherung (Einschraubgewinde **1.1**) verzichtet werden.

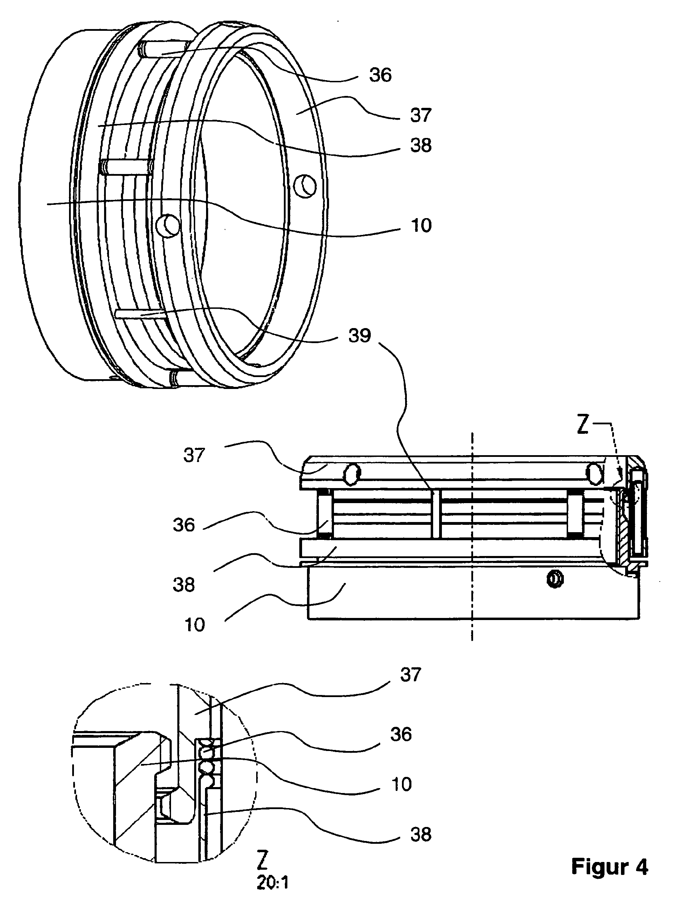

In einer weiteren vorteilhaften Ausgestaltung stellt die von den beiden Ringen **37** und **38,** mit den zwischen diesen, auf Stiften **39** angeordneten Spiralfedern **36** gebildete Federkäfig eine vorgefertigte, verbundene Einheit dar. In **Figur 4** ist die Komplettansicht und Details eines vorgefertigten, verbundenen Federkäfigs dargestellt.

Der Ring **38** und ein Mitnahmeringe **10.1** bis **10.4,** erhalten ein Feingewinde mit einer möglichst kleinen Steigung, beispielsweise M27 x 0,25.

Der Federkäfig **41, 42** wird nun zusammengesteckt, d. h. die Stifte **39** werden mit den aufgesteckten Spiralfedern **36** in die Bohrungen des Rings **38** gedrückt.
Nun wird der Ring **38** über das Gewinde des Mitnahmeringe **10.1** bis **10.4** geschraubt und der Federkäfig **41, 42** ist montiert.

Ein derartiger Federkäfig **41, 42** läßt sich beispielsweise auch in tiefen Hülsen problemlos montieren. Außerdem kann ein derartiger Federkäfig **41, 42** komplett um 360° gedreht werden.

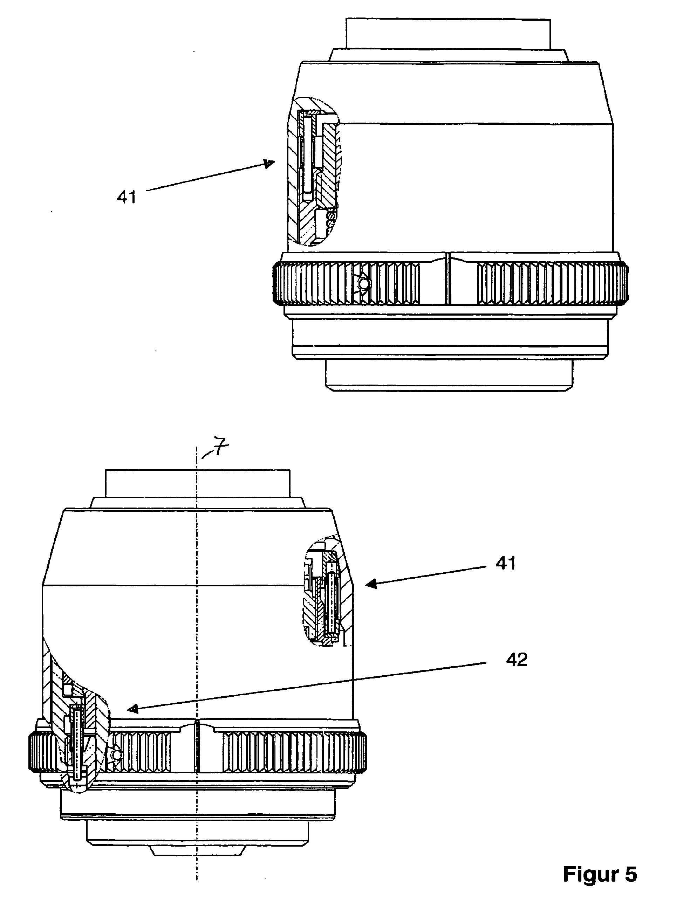

Aus der **Figur 5** ist ersichtlich, dass die erfindungsgemäßen Federkäfige an den verschiedensten Stellen des Mikroskopobjektivs einsetzbar sind. Mit den Federkäfigen können dabei neben unterschiedliche Federkräfte auch verschiedene Federwege realisiert werden. Hierbei wird durch den kontinuierlichen Druck des Federkäfigs **41** das Spiel der drehbaren Bauteile im Mikroskopobjektiv in axialer Richtung beseitigt. Der Federkäfig **42** kompensiert das Spiel der für die Bewegung der Optikglieder zuständig Stellgewinde und übt ebenfalls einen kontinuierlichen, radial, gleichmäßigen Druck auf die Bauteile aus.

Der vorgeschlagene Federkäfig ist durch die Anzahl und die Auswahl der Spiralfedern sowohl an die erforderliche Federkraft als auch den Federweg variabel anpassbar. Es sind sowohl kleine Federwege, unter 1mm, als auch lange Federwege mit einer hohen, variablen Federkraft möglich. Mit einem kleinen Sortiment an Druckfedern kann ein großer Bereich an Federkraft und Federweg abgedeckt werden.

Des weiteren ist der vorgeschlagene Federkäfig in beliebiger Anzahl in Mikroskopobjektiven jeglicher Art einsetzbar, um eine spielfreie und/oder federnde Bewegung der Teile gewährleisten zu können. Eine federnde Bewegung ist insbesondere dort erforderlich, wo es aufgrund eines geringen Arbeitsabstandes nötig ist, das die in einer Hülse montierten optischen Glieder in diese Hülse eintauchen können, falls der Anwender das Objektiv auf das Präparat oder den Probentisch gefahren hat. Dies dient dem Schutz des Mikroskopobjektivs.

Mit dem erfindungsgemäßen Federkäfig wird eine Lösung vorgeschlagen, die die Nachteile bei der Verwendung einzelner Druckfedern vermeiden. Die vorgeschlagenen Federkäfige können prinzipiell alle Druckfedern in weiteren, auch nicht baugleichen Mikroobjektiven und auch anderen Objektiven bei denen Platzprobleme bestehen, ersetzten. Durch die Variabilität des in dieser Erfindung aufgeführten Federkäfigs kann das Druckfedersortiment wesentlich verringert werden.

Die Druckverteilung auf die Bauteile im Mikroobjektiv wird durch den Einsatz des Federkäfigs optimiert, da durch die gleichmäßig über den Umfang verteilte Anordnung der einzelnen Spiralfedern eine gleichmäßige Druckverteilung gewährleistet ist. Die optischen als auch die mechanischen Eigenschaften der Mikroskopobjektive können dadurch wesentlich verbessert werden.

### Bezugszeichenliste

- 1: Hauptfassung
- 1.1: Einschraubgewinde
- 2: Zylinderhülse
- 3.1 bis 3.4: Durchbrüche
- 4.1 bis 4.4: Korrekturfassungen
- 6.1 bis 6.4: Bolzen
- 7: optische Achse
- 8.1 bis 8.4: Außengewinde
- 9.1 bis 9.4: Gewinderinge
- 10.1 bis 10.4: Mitnahmeringe
- 11: Einstellring
- 12.1 bis 12.4: Federelemente
- 13.1 bis 13.4: Schrauben
- 14: Sicherungselement
- 14.1: Zwischenteil

- 36: Spiralfedern
- 37: Ring
- 38: Ring
- 39: Stifte
- 40: Bohrungen
- 41: Federkäfig
- 42: Federkäfig

## Patentansprüche

1. Mikroskopobjektiv mit axial verstellbaren Korrekturfassungen (4.1 bis 4.4) zur Anpassung an unterschiedliche, die Abbildungsgüte beeinflussende Parameter, bei dem die axiale Verstellung der Korrekturfassungen (4.1 bis 4.4) relativ zu einer feststehenden Hauptfassung (1) von einem außen an der Hauptfassung (1) angeordneten Einstellring (11) über einen in der jeweiligen Korrekturfassung angeordneten, radial zur optischen Achse (7) des Objektivs gerichteten, in Durchbrüchen von Gewinderingen eingreifenden Zapfen (39) realisierbar ist, **dadurch gekennzeichnet, dass** zum spielfreien Bewegen der Teile untereinander Federelemente (36) vorgesehen sind, wobei das Objektiv mindestens drei Korrekturfassungen (4.1 bis 4.4) umfasst und die Korrekturfassungen (4.1 bis 4.4.) durch mindestens einen Einstellring (11) ohne eine zusätzliche Drehung um die optische Achse (7) des Objektivs in Richtung dieser Achse (7) verstellbar sind.

2. Mikroskopobjektiv nach Anspruch 1, umfassend eine Hauptfassung (1), die mit einer innen liegenden Zylinderhülse (2) mit axial gerichteten Durchbrüchen (3.1 bis 3.4) fest verbunden ist, axial verstellbare Korrekturfassungen (4.1 bis 4.4) zur Aufnahme optischer Glieder, welche in der Zylinderhülse (2) axial verschiebbar gelagert sind und an denen außen jeweils ein, durch einen zugeordneten Durchbruch (3.1 bis 3.4) der Zylinderhülse (2) hindurch reichender, radial gerichteter Bolzen (6.1 bis 6.4) oder Schraube angeordnet ist, wobei mit jeweils einem Bolzen (6.1 bis 6.4) in Wirkverbindung stehende, mit einem Außengewinde (8.1 bis 8.4) gleicher oder unterschiedlicher Steigung versehene Gewinderinge (9.1 bis 9.4), welche nur axial verschiebbar auf der Zylinderhülse (2) gelagert sind und in ein Innengewinde entsprechender Steigung von jeweils den Gewinderingen (9.1 bis 9.4) zugeordneten Mitnahmeringen (10.1 bis 10.4) eingreifen, die um die optische Achse (7) drehbar in der Hauptfassung (1) angeordnet sind und mit mindestens einem außen an der Hauptfassung (1) angeordneten Einstellring (11) in Wirkverbindung stehen und mit diesem gedreht werden können.

3. Mikroskopobjektiv nach mindestens einem der vorgenannten Ansprüche, bei dem als Federelemente jeweils mindestens drei, gleichmäßig über den Umfang verteilte, in axialer Richtung wirkende Spiralfedern (36) vorhanden sind.

4. Mikroskopobjektiv nach mindestens einem der vorgenannten Ansprüche, bei dem die gleichmäßig über den Umfang verteilten, in axialer Richtung wirkenden Spiralfedern (36) durch einen ersten Ring (37) fixiert werden, der über Stifte (39) in axialer Richtung verfügt, auf die die Spiralfedern (36) gesteckt sind, die Stifte (39) in Bohrungen (40) eines zweiter Ring (38) eingreifen, wobei die Bohrungen (40) zumindest so tief sind, dass der erforderliche Federweg gewährleistet ist, die beiden Ringe (37, 38) mit den zwischen diesen, auf Stiften (39) angeordneten Spiralfedern (36) einen Federkäfig (41, 42) bilden, der jeweils zwischen den Gewinderingen (9.1 bis 9.4) und Zylinderhülse (2) angeordnet wird und ein spielfreies und/oder federndes Bewegen der Teile gewährleistet.

5. Mikroskopobjektiv nach Anspruch 4, bei dem zumindest einer der beiden Ringe (37, 38), die den Federkäfig (41, 42) mit den auf den Stiften (39) angeordneten Spiralfedern (36) bilden, als Gewindering (9.1 bis 9.4) oder Mitnahmering (10.1 bis 10.4) ausgebildet sein kann.

6. Mikroskopobjektiv nach Anspruch 4, bei dem der zweite Ring (38) mit den die Stifte (39) des ersten Ringes (37) aufnehmenden Bohrungen (40) mit der Hauptfassung (1) fest verbunden oder in die Hauptfassung (1) integriert wird.

7. Mikroskopobjektiv nach Anspruch 4, bei dem der von den beiden Ringen (37, 38) mit den auf Stiften (39) angeordneten Spiralfedern (36) gebildete Federkäfig (41, 42) eine vorgefertigte, verbundene Einheit darstellt.

8. Mikroskopobjektiv nach Anspruch 7, bei dem zum Zwecke der Gewährleistung eines spielfreien und/oder federnden Bewegens der Teile ein oder mehrere von den Ringen (37, 38) mit den auf Stiften (39) angeordneten Spiralfedern (36) gebildete Federkäfige (41, 42) angeordnet sind.

## Claims

1. Microscope objective with axially adjustable corrective mounts (4.1 to 4.4) for adaptation to different parameters that influence the imaging quality, in which the axial adjustment of the corrective mounts (4.1 to 4.4) relative to a fixed main mount (1) can be implemented by an adjusting ring (11), arranged externally on the main mount (1), by using a catch (39), which is arranged in the respective corrective mount, aligned radially with respect to the optical axis (7) of the objective and engages in breakthroughs of threaded rings, **characterized in that** spring elements (36) are provided for the play-free movement of the parts amongst themselves, with the objective comprising at least three corrective mounts (4.1 to 4.4) and the corrective mounts (4.1 to 4.4) being adjustable in the direction of the optical axis (7) of the objective by use of at least one adjusting ring (11) without an additional rotation about said axis (7).

2. Microscope objective according to Claim 1, comprising a main mount (1) which is fixedly connected to an interior cylinder sleeve (2) with axially aligned breakthroughs (3.1 to 3.4), axially adjustable corrective mounts (4.1 to 4.4) for holding optical members which are mounted in the cylinder sleeve (2) in an axially displaceable manner and on which respectively one radially directed stud (6.1 to 6.4) or screw, which reaches through an associated breakthrough (3.1 to 3.4) of the cylinder sleeve (2), is arranged externally, with provision being made for threaded rings (9.1 to 9.4), which are operatively connected to respectively one stud (6.1 to 6.4), are provided with a male thread (8.1 to 8.4) with the same or different pitch, are mounted on the cylinder sleeve (2) in an only axially displaceable manner and engage in a female thread with a corresponding pitch of pick-up rings (10.1 to 10.4) that are respectively associated with the threaded rings (9.1 to 9.4), which pick-up rings are arranged in the main mount (1) such that they are rotatable about the optical axis (7), are operatively connected to at least one adjusting ring (11) which is arranged externally on the main mount (1) and can be rotated with said adjusting ring.

3. Microscope objective according to at least one of the aforementioned claims, in which, acting as spring elements, there are respectively at least three helical springs (36) that are uniformly distributed over the circumference and act in the axial direction.

4. Microscope objective according to at least one of the aforementioned claims, in which the helical springs (36), which are uniformly distributed over the circumference and act in the axial direction, are fixed by a first ring (37) that comprises pins (39) in the axial direction, the helical springs (36) having been placed on said pins (39), the pins (39) engaging in bores (40) of a second ring (38), the bores (40) being at least so deep that the required range of spring is ensured, the two rings (37, 38) forming a spring cage (41, 42) with the helical springs (36) which are arranged therebetween and on pins (39), which spring cage is respectively arranged between the threaded rings (9.1 to 9.4) and cylinder sleeve (2) and ensures a play-free and/or resilient movement of the parts.

5. Microscope objective according to Claim 4, in which at least one of the two rings (37, 38), which form the spring cage (41, 42) with the helical springs (36) arranged on the pins (39), can be formed as threaded ring (9.1 to 9.4) or as pick-up ring (10.1 to 10.4).

6. Microscope objective according to Claim 4, in which the second ring (38) with the bores (40) holding the pins (39) of the first ring (37) is fixedly connected to the main mount (1) or integrated into the main mount (1).

7. Microscope objective according to Claim 4, in which the spring cage (41, 42) formed by the two rings (37, 38) with the helical springs (36) arranged on pins (39) constitutes a prefabricated, connected unit.

8. Microscope objective according to Claim 7, in which there is an arrangement of one or more spring cages (41, 42) formed by the rings (37, 38) with the helical springs (36) arranged on pins (39) for the purpose of ensuring a play-free and/or resilient movement of the parts.

## Revendications

1. Objectif de microscope doté de montures correctrices (4.1 à 4.4) ajustables axialement en vue de l'adaptation à différents paramètres qui agissent sur la qualité de la formation d'image et dans lequel l'ajustement axial des montures correctrices (4.1 à 4.4) par rapport à une monture principale fixe (1) peut être réalisé par une bague d'ajustement (11) disposée sur la monture principale (1) et par l'intermédiaire d'un tourillon (39) disposé dans chaque monture correctrice, orienté radialement par rapport à l'axe optique (7) de l'objectif et s'engageant dans des perforations ménagées dans des bagues filetées, **caractérisé en ce que**
des éléments élastiques (36) sont prévus pour permettre de déplacer les pièces les unes par rapport aux autres sans jeu, l'objectif comportant au moins trois montures correctrices (4.1 à 4.4) et les montures correctrices (4.1 à 4.4) pouvant être ajustées par au moins une bague d'ajustement (11) en direction de l'axe optique (7) de l'objectif sans rotation supplémentaire autour de cet axe (7).

2. Objectif de microscope selon la revendication 1, comprenant
une monture principale (1) reliée solidairement à une douille cylindrique intérieure (2) dotée de perforations (3.1 à 3.4) orientées axialement,
des montures correctrices ajustables (4.1 à 4.4) qui reprennent des organes optiques montés à coulissement axial dans la douille cylindrique (2) et à l'extérieur de chacun desquels un boulon (6.1 à 6.4) ou une vis orientés radialement et traversant une perforation (3.1 à 3.4) associée de la douille cylindrique (2) est disposé,
dans lequel des bagues filetées (9.1 à 9.4) sont prévues, celles-ci coopérant chacune avec un boulon (6.1 à 6.4), étant dotées de filets extérieurs respectifs (8.1 à 8.4) de pas identiques ou différents, étant montées sur la douille cylindrique (2) uniquement à coulissement axial et engageant un filet intérieur de pas correspondant de bagues d'entraînement (10.1 à 10.4) associées aux bagues filetées (9.1 à 9.4) respectives qui sont disposées dans la monture principale (1) à rotation autour de l'axe optique (7) et qui coopèrent avec au moins une bague d'ajustement (11) disposée à l'extérieur de la monture principale (1) et peuvent être tournées avec cette dernière.

3. Objectif de microscope selon au moins l'une des revendications précédentes, dans lequel au moins trois ressorts spiralés (36) répartis à intervalles identiques à la périphérie et agissant dans la direction axiale sont prévus pour former chacun des éléments élastiques.

4. Objectif de microscope selon au moins l'une des revendications précédentes, dans lequel les ressorts spiralés (36) répartis à intervalles égaux à la périphérie et agissant dans la direction axiale sont immobilisés par une première bague (37) munie dans la direction axiale de tiges (39) sur lesquelles les ressorts spiralés (36) sont enfichés, les tiges (39) s'engageant dans des alésages (40) d'une deuxième bague (38) et la profondeur des alésages (40) étant suffisante pour permettre au moins le parcours élastique nécessaire, les deux bagues (37, 38) formant avec les ressorts spiralés (36) disposés entre elles sur des tiges (39) une cage élastique (41, 42) qui est disposée entre les bagues filetées (9.1 à 9.4) et la douille cylindrique (2) et qui assure un déplacement sans jeu et/ou élastique des parties.

5. Objectif de microscope selon la revendication 4, dans lequel au moins l'une des deux bagues (37, 38) qui forment la cage élastique (41, 42) avec les ressorts spiralés (36) disposés sur les tiges (39) peut être configurée comme bague filetée (9.1 à 9.4) ou bague d'entraînement (10.1 à 10.4).

6. Objectif de microscope selon la revendication 4, dans lequel la deuxième bague (38) qui porte les alésages (40) qui reprennent les tiges (39) de la première bague (37) est reliée solidairement à la monture principale (1) ou est intégrée dans la monture principale (1).

7. Objectif de microscope selon la revendication 4, dans lequel la cage élastique (41, 42) formée par les deux bagues (37, 38) et les ressorts spiralés (36) disposés sur des tiges (39) forme une unité préfabriquée d'un seul tenant.

8. Objectif de microscope selon la revendication 7, dans lequel une ou plusieurs cages élastiques (41, 42) formées par les bagues (37, 38) avec les ressorts spiralés (36) disposés sur des tiges (39) sont prévues pour permettre un déplacement sans jeu et/ou élastique des parties.
